# EUROPEAN PATENT APPLICATION

(11) **EP 4 836 584 A1**
(43) Date of publication of application: **04.11.2026**
(21) Application number: 25851725.9
(22) Date of filing: 07.07.2025
(51) Int. Cl.: H05B 1/02, H05B 3/03, H01M 4/04, G06N 3/0442, G01K 1/02, G05D 23/19, F26B 3/28, G06N 3/04

(54) **ELECTRONIC DEVICE AND METHOD FOR CONTROLLING SAME**

(30) Priority: 05.08.2024 KR 20240104157; 20.09.2024 KR 20240127271
(71) Applicant: LG Energy Solution, Ltd., Seoul 07335 (KR)
(72) Inventor: PARK, Jinseo, Daejeon 34122 (KR); KIM, Mooyoung, Daejeon 34122 (KR); KIM, Minjoo, Daejeon 34122 (KR)
(74) Representative: Plasseraud IP
(86) International application number: PCT/KR2025/009775
(87) International publication number: WO 2026/034817

(57) **Abstract**

According to an embodiment disclosed in the present document, an electronic device comprises: a communication circuit communicating with a drying device including a plurality of drying zones for drying an input electrode and a plurality of heating devices disposed to respectively correspond to the plurality of drying zones to provide heat to the electrode; a memory for storing one or more instructions; and a processor. The one or more instructions, when executed, may be configured to cause the processor to: acquire driving state information about the drying device when the drying device operates after being floated; acquire state information about at least one electrode put into the drying device; determine an output of each of the plurality of heating devices on the basis of the driving state information about the drying device and the state information about the at least one electrode; and control the plurality of heating devices on the basis of the determined output of each of the plurality of heating devices.

## Description

### Technical Field

This application claims the benefit of Korean Patent Application Nos. 10-2024-0104157, filed on August 5, 2024, and 10-2024-0127271, filed on September 20, 2024 in the Korean Intellectual Property Office, the disclosures of which are incorporated herein by reference in their entireties.

Example embodiments of the present disclosure relate to an electronic device and a control method of the same.

### Background Art

Recently, the research and development of a secondary battery is actively conducted. Here, a secondary battery is a rechargeable and dischargeable battery, and it means that it includes all of a conventional nickel-cadmium (Ni/Cd) battery, nickel-metal hydride (Ni/MH) battery, and the like, and an up-to-date lithium-ion battery. Among secondary batteries, the lithium-ion battery has a higher energy density compared to the conventional Ni/Cd battery, Ni/MH battery, and the like. In addition, the lithium-ion battery may be manufactured to be small in size and light in weight and thus used as the power source of a mobile device. As the range of the use thereof expands to the power source of an electric vehicle recently, the lithium-ion battery is in the spotlight as a next generation energy storage medium.

The secondary battery includes a negative electrode and a positive electrode and may be manufactured through a manufacturing process for an electrode corresponding to the negative electrode and the positive electrode. A manufacturing process for the secondary battery may include various processes, and a drying process for removing the moisture in the electrode may be performed in the manufacturing process. In such a drying process, the surface of the electrode is to be dried properly. When the drying condition is not satisfied, the defect of the electrode may be caused.

### Description of the Invention

### Technical Goals

An object of example embodiments of the present disclosure is to provide an electronic device and a control method of the same for optimally controlling a status of a drying device and managing a surface of an electrode in a drying process.

However, the technical problems to be solved by example embodiments of the present disclosure are not limited to the problems described above and other problems may be clearly understood from the following example embodiments by those skilled in the art.

### Technical solutions

According to an example embodiment of the present disclosure, there is provided an electronic device including a communication circuit configured to communicate with a drying device including a plurality of drying zones for drying an introduced electrode and a plurality of heating devices disposed to individually correspond to the plurality of drying zones and configured to provide heat to the electrode, a memory configured to store one or more instructions, and a processor, and when the one or more instructions are executed, the processor is configured to acquire operation status information on the drying device when the drying device operates after being inactive, acquire status information on at least one electrode introduced into the drying device, determine an output of each of the plurality of heating devices based on the operation status information on the drying device and the status information on the at least one electrode, and control the plurality of heating devices based on the determined output of each of the plurality of heating devices.

The operation status information on the drying device may include an inactivation time and a previous operation time of the drying device and an initial temperature of a heating device corresponding to a drying zone from which the electrode is discharged, and status information on the electrode may include an initial temperature of a surface of the electrode which is positioned in each of the plurality of drying zones and a targeted temperature of the surface of the electrode at a targeted time point.

The targeted time point may include a time point at which a time required for the introduced electrode to reach the drying zone from which the electrode is discharged among the plurality of drying zones elapses from a time point at which the electrode is introduced into the drying device.

The processor may be configured to input the operation status information on the drying device and the status information on the at least one electrode to a trained deep learning model, and identify an output of each of the plurality of heating devices, which is output from the deep learning model.

The deep learning model may be a learning model that has, as an input data set for learning, a plurality of pieces of status information on a plurality of electrodes and a plurality of pieces of operation status information on the drying device corresponding to a plurality of operations of the drying device, has, as an output data set for learning, an output of each of the plurality of heating devices, which corresponds to the plurality of operations of the drying device, and models a correlation between the input data set for learning and the output data set for learning.

The trained deep learning model may include a LSTM model.

The processor may be configured to select a plurality of variables associated with at least one of an operation status of the drying device and a status of the electrode, and determine an input variable for the deep learning model by analyzing a correlation between the plurality of variables and a targeted temperature of a surface of the electrode, which is based on a traveling speed of the electrode.

The processor may be configured to control outputs of all heating devices when the electrode is a negative electrode, and control an output of a heating device corresponding to a drying zone from which the electrode is discharged among the plurality of heating devices when the electrode is a positive electrode.

The plurality of drying zones may include a first drying zone, a second drying zone, and a third drying zone disposed along a traveling path of the electrode.

According to another example embodiment of the present disclosure, there is also provided a method of controlling an electronic device including a plurality of drying zones for drying an introduced electrode and configured to control a plurality of heating devices disposed to individually correspond to the plurality of drying zones and configured to provide heat to the electrode, the method including acquiring operation status information on the drying device when the drying device operates after being inactive, acquiring status information on at least one electrode introduced into the drying device, determining an output of each of the plurality of heating devices based on the operation status information on the drying device and the status information on the at least one electrode, and controlling the plurality of heating devices based on the determined output of each of the plurality of heating devices.

### Effects of the Invention

An electronic device and a control method of the same according to example embodiments of the present disclosure may stably manage a surface of an electrode in a drying process. Accordingly, it is possible to prevent a defect of the electrode.

In addition, the electronic device and the control method of the same according to example embodiments of the present disclosure may effectively determine an optimal condition by using a trained deep learning model even when a drying device has various statuses such as operating after being inactive.

In addition, other various effects identified directly or indirectly through the present disclosure may be additionally provided.

### Brief Description of Drawings

FIG. 1 is a block diagram illustrating a configuration of a system according to an example embodiment of the present disclosure.
FIG. 2 is a diagram illustrating a configuration of a drying device 200 according to an example embodiment of the present disclosure.
FIG. 3 is a diagram illustrating an example of a structure of a deep learning model according to an example embodiment of the present disclosure.
FIG. 4 is a diagram illustrating an example of a result of application of a deep learning model according to an example embodiment of the present disclosure.
FIGS. 5 through 8 are diagrams illustrating an example of correlation analysis for determining an input variable for a deep learning model.
FIG. 9 is a flowchart for describing a control method according to an example embodiment of the present disclosure.
FIG. 10 is a flowchart for describing a detailed control method for an electronic device according to an example embodiment of the present disclosure.
FIG. 11 is a flowchart for describing a method of acquiring a trained deep learning model according to an example embodiment of the present disclosure.

### Mode for Carrying Out the Invention

Hereinafter, various example embodiments of the present disclosure will be described with reference to the accompanying drawings. However, it should be understood that this is not to limit the present disclosure to a specific embodiment and various modifications, equivalents, and/or alternatives of the example embodiments of the present disclosure are included.

The singular form of a noun corresponding to an item in the present disclosure may include one item or a plural of items unless clearly described otherwise in context. In the present disclosure, expressions such as "A or B", "at least one of A and B", "at least one of A or B", "A, B, or C", "at least one of A, B, and C", and "at least one of A, B, or C" each may include one of the items listed together in the corresponding phrase among the expressions or all possible combinations thereof. Terms such as "1st", "2nd" or "first" or "second" may be used to simply distinguish the corresponding element from other elements and do not limit the corresponding elements in another aspect (e.g., importance or order). In the case in which some (e.g., 1st) element is described as being "coupled" or "connected" to another (e.g., 2nd) element with or without the term "functionally" or "communicatively", it is understood that the element may be connected to the other element directly (for example, in a wired manner), wirelessly, or through a 3rd element.

Each of the elements described in the present disclosure (e.g., modules or programs) may include a single object or a plurality of objects. According to the various example embodiments, one or more elements or operations of the corresponding elements may be omitted, or one or more other elements or operations may be added. Alternatively or additionally, a plurality of elements (e.g., the modules or the programs) may be integrated into one element. In this case, the integrated element may perform one or more functions of each of the plurality of elements in a way identical or similar to the way in which a function is performed by the corresponding element among the plurality of elements before the integration. According to the various example embodiments, operations performed by a module, a program, or another element may be executed sequentially, in parallel, repeatedly, or heuristically. Alternatively, one or more of the operations may be executed in different order or omitted, or one or more other operations may be added thereto.

The term "module" or "unit", which is used in the present disclosure, may include a unit realized in hardware, software, or firmware and may be used to be interchangeable with a term such as logic, logic block, component, or circuit. A module may be an integrally formed component or a minimum unit or a portion of the component, which performs one or more functions. For example, according to an example embodiment, the module may be implemented in the form of an application-specific integrated circuit (ASIC).

The various example embodiments may be implemented as the software (e.g., a program or an application) including one or more instructions stored in a storage medium (e.g., a memory) readable by a machine. For example, the processor of the machine may call at least one instruction among the one or more stored instructions from the storage medium and execute the at least one instruction. This allows the machine to be operated so as to perform at least one function according to the at least one called instruction. The one or more instructions may include code generated by a complier or code executable by an interpreter. The storage medium readable by the machine may be provided in the form of a non-transitory storage medium. Here, the term "non-transitory" merely means that the storage medium is tangible and does not include a signal (e.g., an electromagnetic wave). The term does not distinguish the case in which data is stored semipermanently in the storage medium and the case in which the data is stored temporarily therein.

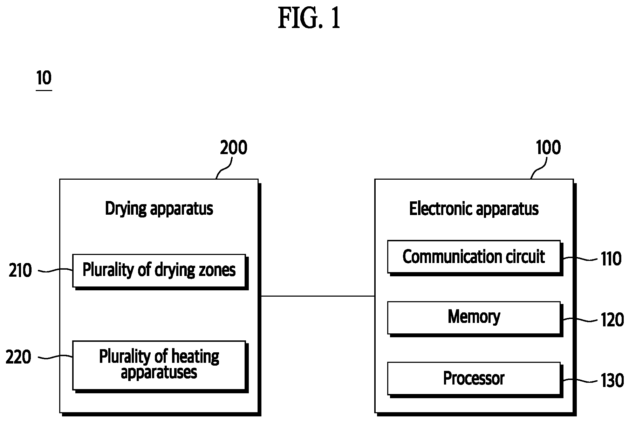

FIG. 1 is a block diagram illustrating a configuration of a system 10 according to an example embodiment of the present disclosure. Referring to FIG. 1, the system 10 may include a drying device 200 for drying an electrode and an electronic device 100 that communicates with and controls the drying device 200.

A manufacturing process for the electrode may include various types of processes and include a drying process for drying a surface of the electrode as an example thereof. For example, the drying process for the electrode may be performed after a slitting process and a notching process. Here, the slitting process may refer to a process of cutting a width of the electrode to match a battery standard, and the notching process may refer to a process of removing a portion except a portion for forming an electrode tab in a non-coated portion at which an active material is not applied. In the drying process, the surface of the electrode, for which is the notching process is finished, may be heated, so that moisture in the electrode may be removed.

Insufficient drying or excessive drying of the electrode in the drying process for the electrode may affect quality of the electrode and may cause a defect. For example, when the electrode is not sufficiently dried, the defect may occur due to the moisture in the electrode. In addition, when the electrode is excessively dried or dried at an excessively high temperature, a surficial defect such as thermal wrinkling may occur.

Particularly, when the drying device 200 for drying the electrode in the drying process is operated after being inactive, since statuses of the drying device 200 and the electrode may vary each time the drying device 200 is operated after being inactive, performing drying suitable for each status has been difficult.

Thus, the electrode apparatus 100 may determine and control a status of the drying device 200 in the drying process for the electrode. Through this, the surface of the electrode may be stably managed in a process of drying the electrode, and the defect may be prevented. Particularly, even when the drying device 200 is operated after being inactive, the electronic device 100 may control the drying device 200 to be in an optimal status in consideration of various initial statuses.

The drying device 200 may include a plurality of drying zones 210 and a plurality of heating devices 220. According to an example embodiment, the plurality of drying zones may include a first drying zone, a second drying zone, and a third drying zone disposed along a traveling path of the electrode. For example, the first drying zone may be an introduction zone through which the electrode is introduced into the drying device 200, the third drying zone may be a discharge zone through which the electrode 200 is discharged to an outside of the drying device 200, and the second drying zone may be an intermediate zone.

The electrode may be introduced into the drying device 200. The drying device 200 may dry the surface of the electrode by providing heat to the electrode introduced therein. The electrode may be transferred in a direction determined along a transfer route, and the surface may be dried while the electrode is transferred in the determined direction in the drying device 200.

To this end, the drying device 200 may include the plurality of drying apparatuses 220. The plurality of heating devices 220 may be disposed to individually correspond to the plurality of drying zones 210 and may provide the heat to the electrode. For example, a heating device may be a mid-infrared (MIR) lamp that emits an infrared ray toward the electrode. However, it is merely an example, and a type of the heating device is not limited thereto.

The electronic device 100 may manage the electrode in the drying process, determine the status of the drying device 200 for drying in an optimal condition, and control the drying device 200. For example, when the drying device 200 is operated after being inactive, the electronic device 100 may determine an output of each of the plurality of heating devices 220 and control the plurality of heating devices 220 based on the determined output.

According to an example embodiment, the electronic device 100 may include a communication circuit 110, a memory 120, and a processor 130. At least one of elements included in an electronic device 100 may be omitted, or another element may be added to the electronic device 100. Additionally or alternatively, some elements may be integrally implemented or may be implemented as a single entity or multiple entities. At least some elements in the electronic device 100 may be integrally implemented or may be implemented as a single entity or multiple entities. The at least some elements in the electronic device 100 may be connected to each other through a bus, a general purpose input/output (GPIO), a serial peripheral interface (SPI), a mobile industry processor interface (MIPI), or the like and may send and receive data and/or a signal to and from each other.

The communication circuit 110 may establish a wired or wireless communication channel with an external device (e.g., a drying device 100) and transmit and receive a variety of data to and from the external device. The communication circuit 110 may include at least one port for connection to the external device through a wired cable in order to communicate with the external device in a wired manner. The communication circuit 110 may include a cellular communication module and may be configured to be connected to a cellular network (e.g., 3G, LTE, 5G, Wibro, or Wimax). According to an example embodiment, the communication circuit 110 may include a near-field communication module to transmit and receive the data to and from the external device by using near field communication (e.g., Wi-Fi, Bluetooth, Bluetooth Low Energy(BLE), or UWB), but is not limited thereto. For example, the communication circuit 110 of the electronic device 100 may communicate with the drying device 200 and may send and receive a variety of data and/or a signal through communication.

The memory 120 may store a variety of data used by at least one element (e.g., the processor 130). The memory 120 store instructions for an operation of the processor 130. A program may be stored as software in the memory 120 and include, for example, an operating system, a middleware, or an application. Unless noted otherwise, the memory 120 in the present disclosure may refer to a set of one or more memories 120. For example, the memory 120 may store a trained deep learning model.

The processor 130 may be an element for performing calculation or data processing for communication and/or control of each element and may be operationally connected to elements of the electronic device 10. The processor 130 may load, into the memory 120, an instruction or data received from another element of the electronic device 10, process the instruction or the data stored in the memory 120, and store result data. Unless noted otherwise, the processor 130 in the present disclosure may refer to a set of one or more processors 130.

According to an example embodiment, the processor 130 may acquire operation status information on the drying device 200 when the drying device 200 is operated after being inactive. When the drying device 200 is operated after being inactive, the drying device 200 may have various operation statuses, and the processor 130 may acquire the operation status information on the drying device 200 in order to optimally manage drying of the electrode according to an operation status of the drying device 200. For example, the processor 130 may acquire the operation status information on the drying device 200 by communicating with the drying device 200 through the communication circuit 110.

According to an example embodiment, the operation status information on the drying device 200 may include at least a portion of an inactivation time and a previous operation time of the drying device 200, an initial status of each of the plurality of drying zones 210, and an initial status of each of the plurality of heating devices 220. Here, the inactivation time of the drying device 200 may refer to a time between a time point at which a previous operation ends and a time point at which a current operation starts, and the previous operation time of the drying device 200 may refer to a time for which the previous operation continues. The initial status of each of the plurality of drying zones 210 may include, for example, an internal temperature of each drying zone. The initial status of each of the plurality of heating devices 220 may include, for example, an initial temperature of each heating device. In addition, an initial status described herein may refer to a status at a time point at which the drying device 200 is operated after being inactive.

Specifically, the operation status information on the drying device 200 may include the inactivation time and the previous operation time of the drying device and an initial temperature of a heating device corresponding to a drying zone from which the electrode is discharged.

According to an example embodiment, the processor 130 may acquire status information on at least one electrode introduced into the drying device 200. Since a status of the electrode may vary at the time point at which the drying device 200 is operated after being inactive, the processor 130 may acquire status information on the electrode.

According to an example embodiment, the status information on the electrode may include an initial temperature of the surface of the electrode which is positioned in each of the plurality of drying zones 220 and a targeted temperature of the surface of the electrode at a targeted time point.

The processor 130 may aim to stably manage the surface of the electrode in the drying process for the electrode and may aim to control a temperature of the surface of the electrode to be in a targeted temperature range to this end. Thus, the processor 130 may acquire, as the status information on the electrode, the initial temperature of the surface of the electrode and the targeted temperature of the surface of the electrode at the targeted time point when the drying device 200 is operated after being inactive in order to control the drying process for the electrode.

According to an example embodiment, the targeted time point may include a time point at which a time required for the introduced electrode to reach the drying zone from which the electrode is discharged among the plurality of drying zones 210 elapses from a time point at which the electrode is introduced into the drying device 200. In other words, the targeted time point may include a time point at which a time required for the electrode to reach a final drying zone elapses from the time point at which the electrode is introduced into the drying device 200. For example, when the plurality of drying zones 210 includes the first drying zone, the second drying zone, and the third drying zone, the targeted time point may be a time point at which a time required for the electrode to reach the third drying zone elapses from the time point at which the electrode is introduced into the drying device 200. As an example, when the electrode reaches the third drying zone nine seconds later after being introduced into the first drying zone, the targeted time point may be a time point later than nine seconds from a time point at which the electrode is introduced into the first drying zone.

Since aiming to allow a temperature of the surface of the electrode to satisfy the targeted temperature when the drying process for the electrode is performed, the processor 130 may set, to the targeted time point, the time point at which the time required for the introduced electrode to reach the drying zone from which the electrode is discharged among the plurality of drying zones 210 elapses from the time point at which the electrode is introduced into the drying device 200.

Also, the targeted time point may be set for each of the plurality of drying zones 220. That is, different targeted time points may be individually set for the drying zones. For example, when the plurality of drying zones 220 includes the first drying zone, the second drying zone, and the third drying zone, and when times required for the electrode introduced into the drying device 200 to reach the first drying zone are seven seconds, times required to reach the second drying zone are eight seconds, and times required to reach the third drying zone are nine seconds, a targeted time point for the first drying zone may be set to a time point at which seven seconds elapse after introduction of the electrode, a targeted time point for the second drying zone may be set to a time point at which eight seconds elapse after the introduction of the electrode, and a targeted time point for the third drying zone may be set to a time point at which nine seconds elapse after the introduction of the electrode. As such, the processor 130 may set a targeted time point in each drying zone to minutely manage a drying condition in a process in which the electrode passes through each drying zone.

According to an example embodiment, when the time point at which the time required for the electrode to reach the final drying zone elapses from the time point at which the electrode is introduced into the drying device 200 is referred to as a first targeted time point, the targeted time point may further include a second targeted time point at which a second time elapses from the first targeted time point. The second time may be set in advance. For example, the second time may be set based on a traveling speed of the electrode similarly to a first time.

An output of a heating device in the final drying zone may be set to be higher than an output of a heating device in another drying zone, and the surface of the electrode may be excessively dried due to heat provided while the electrode passes through the final drying zone or due to residual heat remaining after the electrode passes through the final drying zone. Thus, the processor 130 may set, to the additional second targeted time point, a time point after a lapse of a predetermined time after arrival of the electrode at the final drying zone and may manage the targeted temperature of the surface of the electrode, which is at the second targeted time point. For example, the second targeted time point may be a time point at which six seconds elapses from the first targeted time point.

For example, when the drying device 200 is operated in a state in which an initial temperature of the electrode is low, and when the targeted temperature at the second targeted time point is not taken into consideration, outputs of the plurality of heating devices 220 may be set to be high in order to reach the targeted temperature of the surface of the electrode at the first targeted time point. In this case, the output of the heating device in the final drying zone may become high, and a gradient of increase in the temperature of the surface of the electrode may become large. Accordingly, the temperature of the surface of the electrode after the first targeted time point may exceed the targeted temperature range.

Thus, according to an example embodiment, the processor 130 may further consider the targeted temperature of the surface of the electrode at the second targeted time point at which a predetermined time elapses from the first targeted time point. In this case, the targeted temperature of the surface of the electrode at the second targeted time point may be used as an input variable (namely, the targeted temperature of the surface of the electrode at the targeted time point) for a deep learning model that will be described below.

According to an example embodiment, the processor 130 may determine the output of each of the plurality of heating devices 220 based on the operation status information on the drying device and the status information on the at least one electrode. The processor 130 may determine the output of each of the plurality of heating devices 220 in order to manage the drying of the electrode at a time at which the drying device 200 operates after being inactive.

According to an example embodiment, the processor 130 may determine the output of each of the plurality of heating devices 220 by using the deep learning model which is trained. To this end, the processor 130 may acquire the trained deep learning model by generating and training the deep learning model. In some cases, generation and training of the deep learning model may be performed in a separate apparatus (e.g., an external server for the training), not the electronic device 100. In this case, the processor 130 may acquire the trained deep learning model from the external server.

### Training of Deep Learning Model

Hereinafter, a description will be provided under an assumption that the deep learning model is generated and trained by the electronic device 100.

To begin with, the processor 130 may generate the deep learning model. The generation of the deep learning model may refer to setting a structure of a neural network forming the deep learning model and an initial value of a parameter granted to the neural network.

In addition, the processor 130 may finally generate the trained deep learning model by training the generated deep learning model. Here, generation of the trained deep learning model by the training may refer to that the trained deep learning model configured to perform a desired feature (or purpose) is created as the initially generated deep learning model is trained by using multiple pieces of training data according to a training method. As described above, such training may be performed in the electronic device 100 itself or through a separate server and/or a separate system. An example of the training method for the deep learning model includes supervised learning, unsupervised learning, semi-supervised learning, or reinforcement learning, but is not limited to the aforementioned example.

The structure of the neural network forming the deep learning model may be formed of a plurality of neural network layers. Each of the plurality of neural network layers may have a plurality of weight values and perform neural network calculation through a calculation result of a previous layer and calculation between the plurality of weight values. The plurality of weight values of the plurality of neural network layers may be optimized by a result of training the deep learning model. For example, a loss function or a cost function for optimal learning may be set for the deep learning model, and the plurality of weight values may be updated so that a loss value or a cost value acquired by the deep learning model in each training process is decrease or minimized.

An artificial neural network forming the deep learning model may include a deep neural network (DNN), a convolutional neural network (CNN), a recurrent neural network (RNN), a long short-term memory (LSTM), a restricted Boltzmann machine (RBM), a deep belief network (DBN), a bidirectional recurrent deep neural network (BRDNN), Deep Q-Networks, or the like, but is not limited to the aforementioned example.

The processor 130 may acquire a data set for learning in order to train the deep learning model. The data set for learning may be formed of, for example, pieces of data acquired in advance or pieces of data generated based thereon, and a suitable data set may be formed according to the training method for the deep learning model, a purpose of the deep learning model, a type of the neural network, or the like.

According to an example embodiment, the deep learning model may learn a correlation between input data and output data by using an input data set for learning and an output data set for learning. The deep learning model may be trained to predict an output when data is input and may be trained to predict output data for leaning from input data for learning. Through this, the deep learning model may model a correlation between the output data and the input data for learning in a process of learning. This may be understood as performing supervised training of the deep learning model, and the deep learning model may be trained with the output data set for learning as a label. For example, the deep learning model may generate a prediction from the input data set for learning and may be trained by comparing the prediction and the output data set.

According to an example embodiment, the deep learning model may have, as the input data set for learning, a plurality of pieces of operation status information on the drying device 200 corresponding to a plurality of operations of the drying device 200 and a plurality of pieces of status information on a plurality of electrodes and may have, as the output data set for learning, an output of each of the plurality of heating devices 200, which corresponds to the plurality of operations of the drying device 200.

For example, the processor 130 may acquire operation status information on the drying device 200, which is acquired from each of a plurality of previous operations of the drying device 200, and may form, therewith, the input data set for learning. Also, the processor 130 may acquire an output of each of the plurality of heating devices 220, which is acquired from each of the plurality of previous operations of the drying device 200, and may form, therewith, the output data set for learning.

Since the processor 130 is to obtain optimal outputs of the plurality of heating devices 220 for drying the electrode by using the deep learning model, the output of each of the plurality of heating devices, which corresponds to the plurality of operations of the drying device 200, may be formed into the output data set for learning for the deep learning model.

In addition, in order to increase performance of the deep learning model, the processor 130 may select variables associated with the outputs of the plurality of heating devices 220 or the targeted temperature of the surface of the electrode and form pieces of data corresponding to the selected variables into the input data set for learning.

With respect to the deep learning model, since performance of learning and performance of prediction of a result are decreased when an input and an output have a small relationship or do not have a relationship, the processor 130 may select variables associated with a targeted output characteristics and form the input data set for learning.

According to an example embodiment, the processor 130 may select a plurality of variables associated with at least one of the operation status of the drying device 200 and the status of the electrode. In order to select an input variable for training the deep learning model, the processor 130 may select and analyze the plurality of variables. For example, the processor 130 may select a variable, such as an initial status of the drying device 200 or the initial temperature of the surface of the electrode, as the plurality of variables.

According to an example embodiment, the processor 130 may determine the input variable for training the deep learning model by analyzing a correlation between the plurality of variables and the targeted temperature of the surface of the electrode, which is based on the traveling speed of the electrode.

The electrode may be transferred in a determined direction in the drying device 200, and the traveling speed of the electrode may be set to vary depending on cases. In order to optimally control the drying process for the electrode even in an environment in which a speed of the electrode is different, the electronic device 100 may determine variables having a correlation even in different speeds to be the input variable for the deep learning model.

To this end, the processor 130 may analyze a correlation and a reciprocal relationship between input variables and an output characteristic, which are based on the traveling speed of the electrode. For example, in the drying process for the electrode, the traveling speed of the electrode may be set to 1000 or 300 millimeters per second (mm/s), and the processor 130 may select input variables having a correlation and a reciprocal relationship with the targeted temperature of the surface of the electrode as the output characteristic in both cases in which the traveling speed of the electrode is 1000 mm/s and 300 mm/s.

However, it is merely an example. Training of the deep learning model and determination of the input variable for the training may be performed in an external device (e.g., the external server for the training), not the processor 130. In this case, the processor may acquire the trained deep learning model and input variable information on the deep learning model from the external server.

According to an example embodiment, the input variable which forms the input data for learning for the deep learning model may include 1) the inactivation time of the drying device, 2) the previous operation time of the drying device, 3)the initial temperature of the surface of the electrode which is positioned in each of the plurality of drying zones, 4) the initial temperature of the heating device corresponding to the drying zone from which the electrode is discharged, and 5) the targeted temperature of the surface of the electrode at the targeted time point.

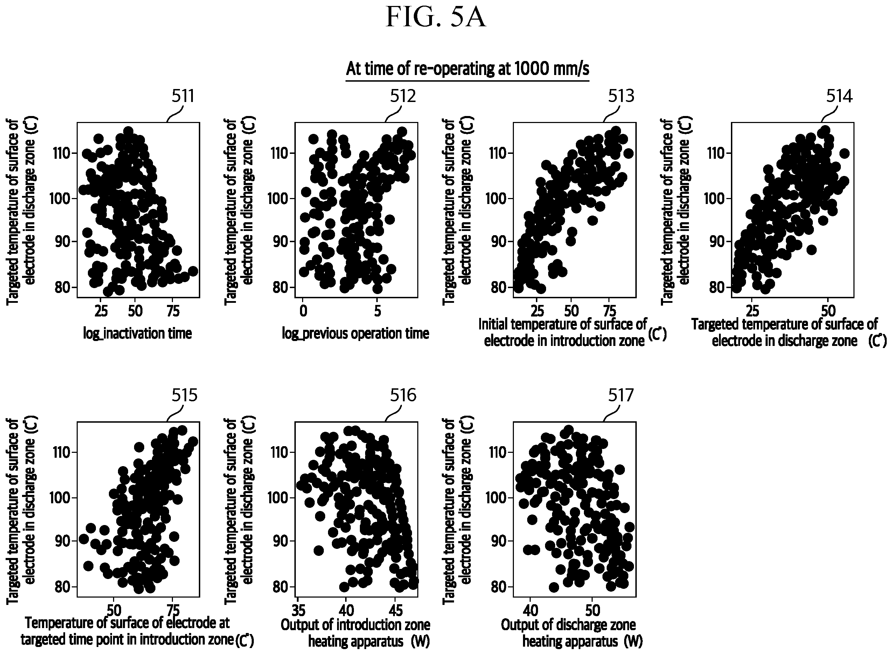

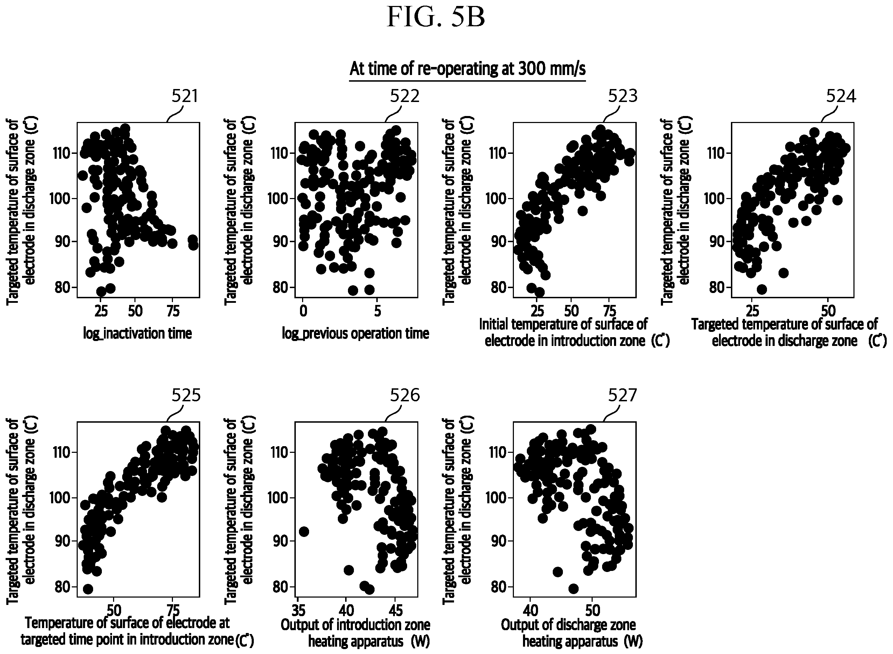

The above input variables may be determined through the above-described correlation analysis and reciprocal relationship analysis. A basis of estimating the input variable will be supplementarily described with reference to FIGS. 5 through 8.

For example, since learning of the output of each of the plurality of heating devices by using the deep learning model aims to manage a status of drying the surface of the electrode in the process of drying the electrode through the drying device 200 and to control the temperature of the surface of the electrode to be the targeted temperature to this end, the processor 130 may include the targeted temperature of the surface of the electrode at the targeted time point as the input variable as the input data for learning for the deep learning model.

In this case, the deep learning model may receive an input on the input data for learning, which is formed of the input variables which are 1) the inactivation time of the drying device, 2) the previous operation time of the drying device, 3)the initial temperature of the surface of the electrode which is positioned in each of the plurality of drying zones, 4) the initial temperature of the heating device corresponding to the drying zone from which the electrode is discharged, and 5) the targeted temperature of the surface of the electrode at the targeted time point, and may be trained therewith.

As such, the processor 130 may form the input data set for learning and the output data set for learning, repeatedly train the deep learning model therewith, and, through this, acquire the trained deep learning model which is optimized for predicting the output of each of the plurality of heating devices 220.

According to an example embodiment, the trained deep learning model may include a long-short term memory (LSTM) model. The LSTM model is a model with relatively high performance in analyzing time-series data or signal data and also a model with relatively high performance in finding a complicated pattern. Thus, the electronic device 100 may use the LSTM model in order to learn a complicated relationship between various variables associated with the statuses of the drying device 200 and the electrode and an output value of the each of the plurality of heating devices 220.

### Use of Trained Deep Learning Model

According to an example embodiment, the processor 130 may input the operation status information on the drying device 200 and the status information on the at least one electrode to the trained deep learning model. Also, the processor 130 may identify an output of each of the plurality of heating devices 220, which is output from the deep learning model. That is, the processor 130 may determine the optimal outputs of the plurality of heating devices 220 by using the trained deep learning model when the drying device 200 is operated after being inactive.

As described above, the processor 130 may identify the output of each of the plurality of heating devices 220 by using an output from the deep learning model. The processor 130 may draw the output of each of the plurality of heating devices 220 by inputting information on the input variables which form the input data for learning to the trained deep learning model.

According to an example embodiment, the processor 130 may input 1) the inactivation time of the drying device, 2) the previous operation time of the drying device, 3)the initial temperature of the surface of the electrode which is positioned in each of the plurality of drying zones, 4) the initial temperature of the heating device corresponding to the drying zone from which the electrode is discharged, and 5) the targeted temperature of the surface of the electrode at the targeted time point, which are acquired at the time point at which the drying device 200 is operated after being inactive, to the trained deep learning model and identify the output of each of the plurality of heating devices 220, which is output from the trained deep learning model.

According to an example embodiment, the processor 130 may control the plurality of heating devices based on the output of each of the plurality of heating devices. This may be understood as that the processor 130 controls the plurality of heating devices 220 at an initial status of operation when the drying device 200 is operated after being inactive.

As such, the processor 130 may control the output of each of the plurality of heating devices 220 in a case in which the drying device 200 is operated after being inactive. In other words, the processor 130 may set output values obtained from the trained deep learning model to respective initial outputs of the plurality of heating devices 220.

Also, the processor 130 may monitor the temperature of the surface of the electrode in a process of operating the drying device 200. According to an example embodiment, the processor 130 may correct an output of at least one of the plurality of heating devices 220 based on the temperature of the surface of the electrode. For example, when a temperature increase rate of the temperature of the surface of the electrode in the final drying zone exceeds a threshold value, the processor 130 may decrease the output of the heating device disposed in the final drying zone.

According to an example embodiment, the processor 130 may differently control the drying device 200 depending on a type of the electrode.

According to an example embodiment, the processor 130 may control outputs of all heating devices when the electrode is a negative electrode. In addition, the processor 130 may control an output of the heating device corresponding to the drying zone from which the electrode is discharged among the plurality of heating devices when the electrode is a positive electrode. In other words, the output of the heating device disposed in the final drying zone may be controlled. As an example, the processor 130 may set an output of a heating device corresponding to a drying zone other than the final drying zone to 0.

For example, the processor 130 may acquire the outputs of the plurality of heating devices 220 from an identical deep learning model and selectively apply at least a portion of the outputs of the plurality of heating devices 220 depending on the type of the electrode.

As another example, the processor 130 may generate a different deep learning model to which learning of an input variable that varies depending on the type of the electrode is applied and may apply an output of a heating device, which is output from a corresponding deep learning model according to the type of the electrode. For example, when the electrode is the positive electrode, input variables corresponding to the final drying zone may be applied, and input variables corresponding to the other drying zone may be excluded, so that the deep learning model may be generated and trained.

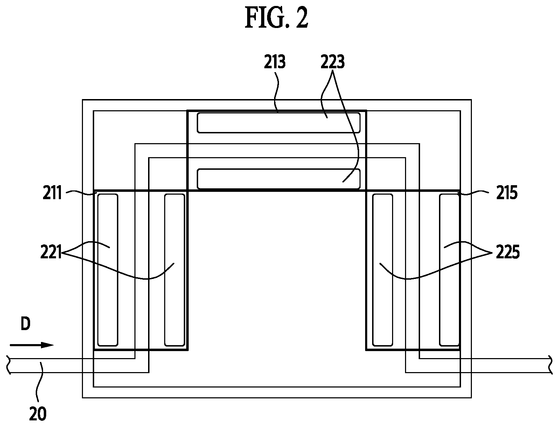

FIG. 2 is a diagram illustrating a configuration of the drying device 200 according to an example embodiment of the present disclosure.

Referring to FIG. 2, the drying device 200 may include a plurality of drying zones 211, 213, and 215. An electrode may move in a determined direction D in the drying device 200.

In addition, the drying device 200 may include a plurality of heating devices 221, 223, and 225 disposed to correspond to respective drying zones. For example, a first heating device 221 may be disposed in a first drying zone 211, a second heating device 223 may be disposed in a second drying zone 213, and a third heating device 225 may be disposed in a third drying zone 215.

Each of the plurality of heating devices 221, 223, and 225 may be disposed on a surface higher than and a surface lower than a transfer route 20. For example, the heating device 221 in the first drying zone 211 may be formed with a pair of a heating device disposed on the surface higher than the transfer route 20 and a heating device disposed on the surface lower than the transfer route 20.

The electrode may move in the determined direction D in the drying device 200, and the plurality of heating devices 221, 223, and 225 of the drying device 200 may dry the electrode by emitting heat. For example, in order to remove moisture in the electrode for which a notching process is finished, the drying device 200 may dry the electrode by heating a surface of the electrode.

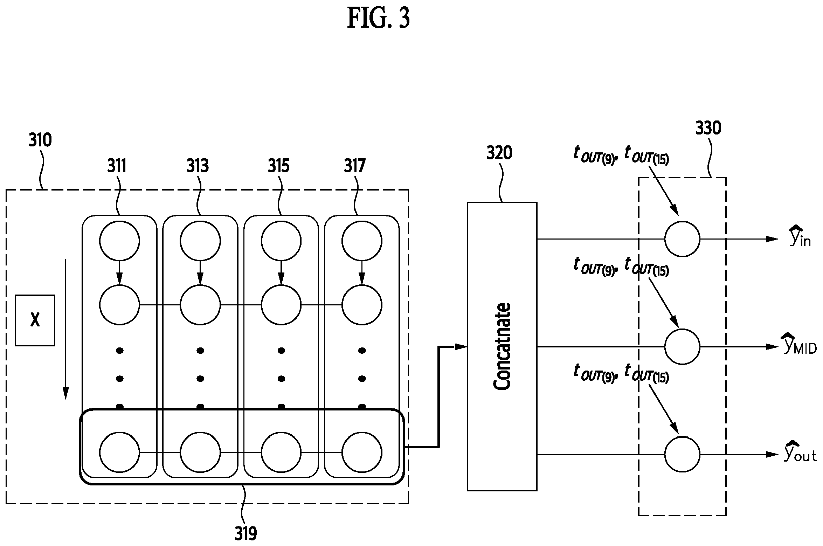

FIG. 3 is a diagram illustrating an example of a structure of a deep learning model according to an example embodiment of the present disclosure.

Referring to FIG. 3, an example of a structure of a neural network in a case that the deep learning model is a LSTM model is illustrated. The LSTM model according to an example embodiment may include an input layer 310, a concatenation layer 320, and a hidden layer 330.

A sequence length parameter for input data may be defined in the LSTM model. Here, a sequence length may be a parameter showing an element of data, such as a length of input data that is input to the LSTM model. According to an example embodiment, the sequence length in the LSTM model may be set to the number of input variables of the input data. For example, when six different input variables are input to the LSTM model, the sequence length may be set to 6.

According to an example embodiment, the processor 130 may allow a deep learning model, which is to be applied, to differ depending on a type of an electrode and may generate the deep learning model so that the deep learning model varies to this end. In this case, the number of input variables used to train the deep learning model may vary depending on the type of the electrode, and accordingly, the sequence length may be set to vary.

According to an example embodiment, among input variables for the deep learning model, a targeted temperature of a surface of an electrode at a targeted time point may be input to the hidden layer 330. In this case, the sequence length in the deep learning model may be set to a value obtained by deducting, from the number of the input variables, the number of input variables corresponding to the targeted temperature of the surface of the electrode at the targeted time point.

An example of a case in which the sequence length is 4 is illustrated in FIG. 3. Circular dots therein may refer to respective nodes. The example of the case in which the sequence length is 4 is illustrated in FIG. 3, but is not limited thereto.

Input data corresponding to the sequence length in the LSTM model may be input to the input layer 310. The input data which is input to the input layer 310 may pass through a plurality of corresponding sequence nodes according to an input position. For example, a plurality of sub-neural networks 311, 313, 315, and 317 including a plurality of sequence nodes for each input position may be included. The plurality of sub-neural networks 311, 313, 315, and 317 may learn a relationship between nodes.

Outputs of final nodes 319 through which pieces of input data individually pass may pass through the concatenation layer 320. The concatenation layer 320 may concatenate results of passage, through the input layer 310, by the pieces of input data.

An output that passes through the concatenation layer 320 may pass through the hidden layer 330. At this point, the hidden layer 330 may include nodes of which the number corresponds to the number of drying zones. For example, when the drying device 200 includes a first drying zone, a second drying zone, and a third drying zone, the hidden layer 330 may include three nodes as illustrated in FIG. 3.

Data on the targeted temperature of the surface of the electrode at the targeted time point in each drying zone may be input to each node of the hidden layer 330. For example, as described in the above example, data on tOUT(9), which is a targeted temperature of the surface of the electrode at a first targeted time point, and tOUT(15), which is a targeted temperature of the surface of the electrode at a second targeted time point, may be input.

That is, the output of the concatenation layer 320 and the data on the targeted temperature of the surface of the electrode at the targeted time point in each drying zone may be input to the hidden layer, and the hidden layer 330 may finally draw, as output values (namely, ŷin, ŷMID, ŷout), respective outputs of the plurality of drying zones 210.

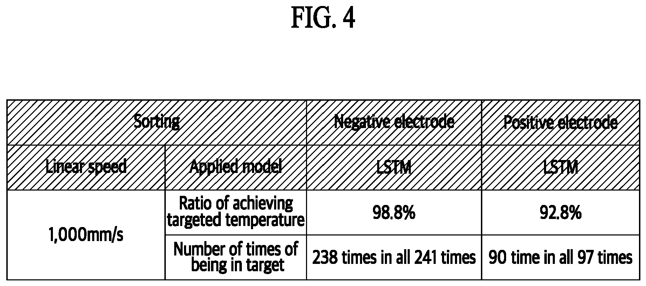

FIG. 4 is a diagram illustrating an example of a result of application of a deep learning model according to an example embodiment of the present disclosure. FIG. 4 illustrates a result of achieving a targeted temperature of an electrode in a process of drying through the drying device 200. As a ratio of achieving the targeted temperature of the electrode is increased, a defect rate in the process of drying the electrode may be decreased, and performance of the deep learning model which is trained may be shown as being relatively high. Here, the targeted temperature of the electrode may refer to the targeted temperature at the targeted time point described above.

For example, referring to FIG. 4, when a traveling speed of the electrode is 1000 mm/s, as a result of controlling outputs of the plurality of heating devices 220 by using the trained deep learning model, it may be identified that the ratio of achieving the targeted temperature of the electrode reaches 98.8% in a case of a negative electrode and 92.8% in a case of a positive electrode.

The ratio of achieving the targeted temperature of the electrode may be calculated with a ratio of the number of times that a temperature of the electrode is in a target that is the targeted temperature to the number of times that the drying device 200 repeats operating after being inactive. For example, in the case of the negative electrode, as the number of times of being in the target in all 241 operations is 238, the ratio of achieving the targeted temperature may be calculated as 98.8%, and in the case of the positive electrode, as the number of times of being in the target in all 97 operations is 90, the ratio of achieving the targeted temperature may be calculated as 92.8%.

As such, when the drying device 200 is operated after being inactive, the electronic device 100 may control the outputs of the plurality of heating devices 220 by using the trained deep learning model. Through this, performance of drying the electrode may be increased, and a defect rate of the electrode may be decreased.

FIGS. 5a through 8 are diagrams illustrating an example of correlation analysis for determining an input variable for a deep learning model.

To begin with, referring to FIGS. 5a and 5b, with respect to a case in which an electrode has different traveling speeds of 1000 mm/s (in FIG. 5a) and 300 mm/s (in FIG. 5b), graphs showing one-to-one correlations between various variables and a targeted temperature of a surface of the electrode in a discharge zone are illustrated.

Graphs 511 to 517 of FIG. 5a may be scatter plots individually showing relationships between the targeted temperature of the surface of the electrode in the discharge zone and a log_inactivation time, a log_previous operation time, an initial temperature of the surface of the electrode in an introduction zone, an initial temperature of the surface of the electrode in the discharge zone, a temperature of the surface of the electrode at a targeted time point in the introduction zone, an output of an introduction zone heating device, and an output of a discharge zone heating device when a traveling speed of the electrode is 1000 mm/s. Similarly, graphs 521 to 527 illustrates a result in a case that the traveling speed of the electrode is 300 mm/s.

Referring to FIGS. 5a and 5b, it may be identified that relationships between the targeted temperature of the surface of the electrode in the discharge zone and respective input variables at the different traveling speeds (of 1000 mm/s and 300 mm/s) are similar. For example, when a graph 513 and a graph 523 are compared, it may be identified that scattered plots have similar tendencies.

In other words, it may be inferred that input variables illustrated in FIGS. 5a and 5b are relevant to the targeted temperature of the surface of the electrode in the discharge zone even at the different traveling speeds.

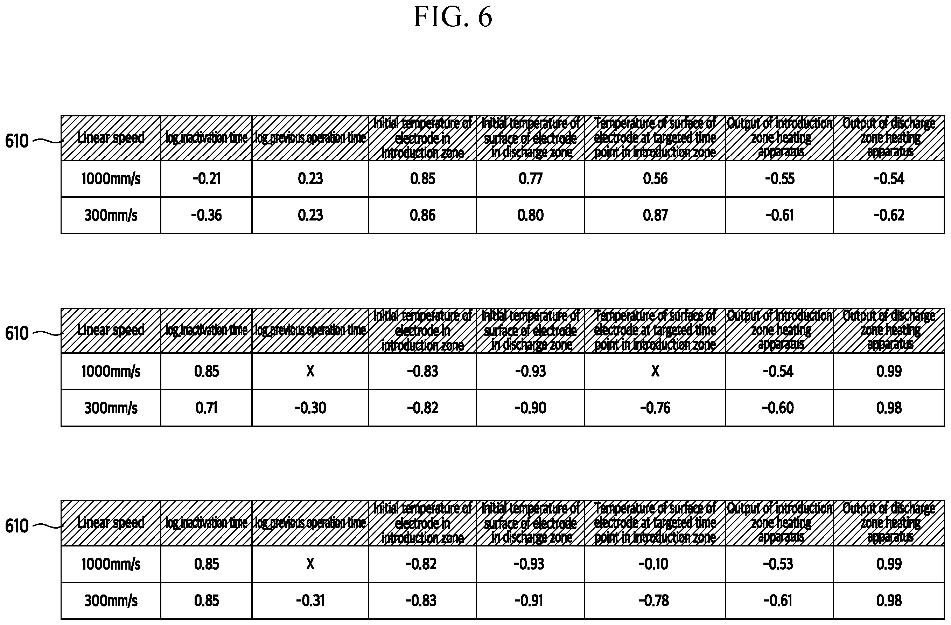

Specifically, in order to analyze a relationship, values of correlations with an output characteristic may be identified for the input variables illustrated in FIGS. 5a and 5b, and a result of analyzing the values of the correlations for the input variables is illustrated in FIG. 6.

A table 610 shows a result of analyzing correlations between the input variables and the targeted temperature of the surface of the electrode in the discharge zone. A table 620 shows a result of analyzing correlations between the input variables and the output of the introduction zone heating device. A table 630 shows a result of analyzing correlations between the input variables and the output of the discharge zone heating device.

Referring to the table 610 through the table 630 of FIG. 6, it may be identified that correlations between a Y value and respective input variables at different linear speeds are shown as being similar and that the values of the correlations have a statistically relevant value.

However, it is deduced that variables, which are the log_previous operation time and the temperature of the surface of the electrode at the targeted time point in the introduction zone among a plurality of input variables, do not have correlations with the output of the introduction zone heating device at 1000 mm/s and that the log_previous operation time does not have a correlation with the output of the discharge zone heating device at 1000 mm/s.

However, although a predetermined input variable does not have a one-to-one correlation with a predetermined output characteristic, since an interaction between the input variables may be present, correlation analysis in consideration of the interaction between the input variables is required.

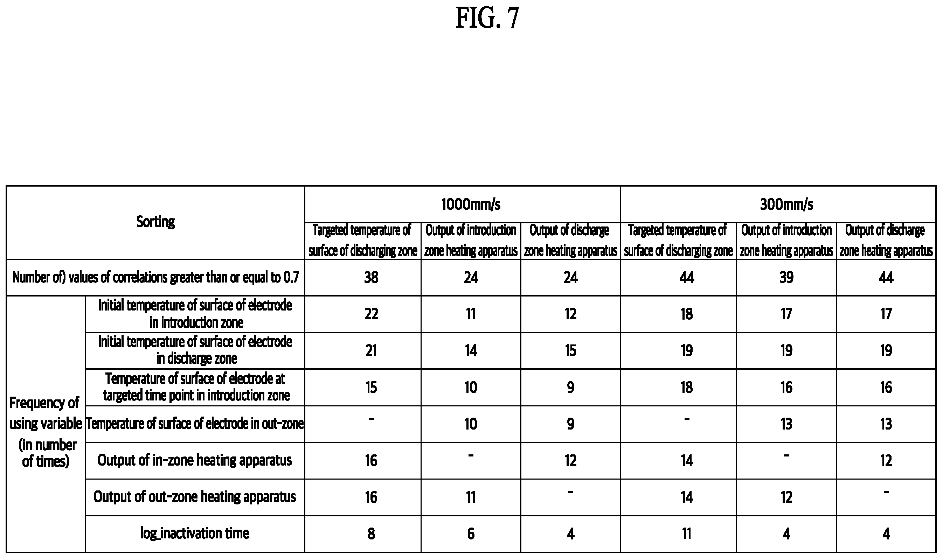

To this end, a result of analyzing a correlation in consideration of the interaction between the input variables is illustrated in FIG. 7.

Referring to a table illustrated in FIG. 7, results of selecting two variables among the plurality of input variables and analyzing correlations with the output characteristic are illustrated as respective components of matrices. Specifically, a value of each component may show a frequency of determining the two variables as showing a high correlation with the output characteristic in a case in which the two variables are selected. For example, since a value of the correlation in consideration of the interaction shows a strong correlation when being greater than or equal to 0.7, the number of times that the value of the correlation is greater than or equal to 0.7 may be counted.

In FIG. 7, it may be identified that significant variables showing a correlation with the output characteristic are similar in all cases in which a linear speed is 1000 mm/s and 300 mm/s. That is, when a frequency of using a variable corresponding to each component is identified, the correlation with the output characteristic may be high as the frequency of using the variable becomes high, and it may be identified that distributions of frequencies of the input variables are drawn as being similar in the cases in which the linear speed is 1000 mm/s and 300 mm/s.

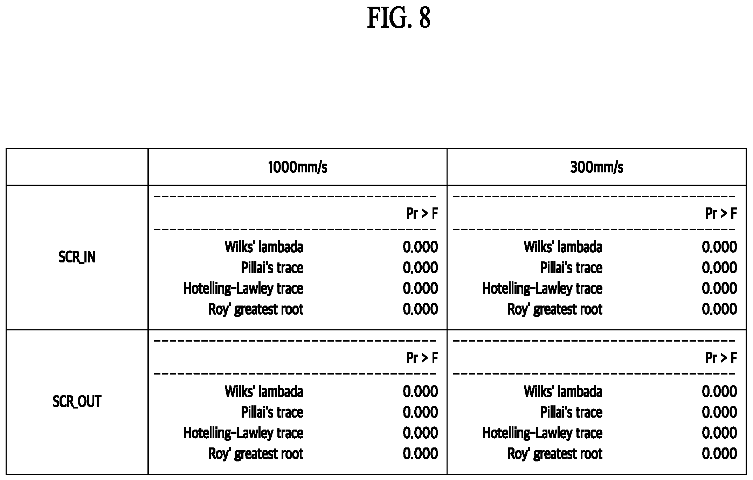

In such correlation analysis in consideration of the interaction between the input variables, the interaction between the input variables may be taken into consideration, but analyzing a simultaneous influence on a plurality of output characteristics is difficult. In this regard, multivariate analysis of variance (MANOVA) between the input variables and the output characteristics may be performed. Also, a result of performing the multivariate analysis of variance is illustrated in FIG. 8.

Referring to FIG. 8, influences, of the input variables, on the output characteristic at the different traveling speeds may be identified. FIG. 8 illustrates influences, of the input variables, on an output of an introduction zone heating device SCR_IN and an output of a discharge zone heating device SCR_OUT among the output characteristics. Specifically, result values according to various calculation schemes is drawn in a Pr>F term in FIG. 8. Here, the Pr>F term may be a value showing a correlation factor. When a value is less than 0.05, it may be estimated that a relevant correlation is present.

That is, referring to FIG. 8, the input variables which are analyzed in FIGS. 5a through 8 may be estimated to have a relevant correlation with an output characteristic of a heating device, and as a result, the above input variables may be used to train the deep learning model.

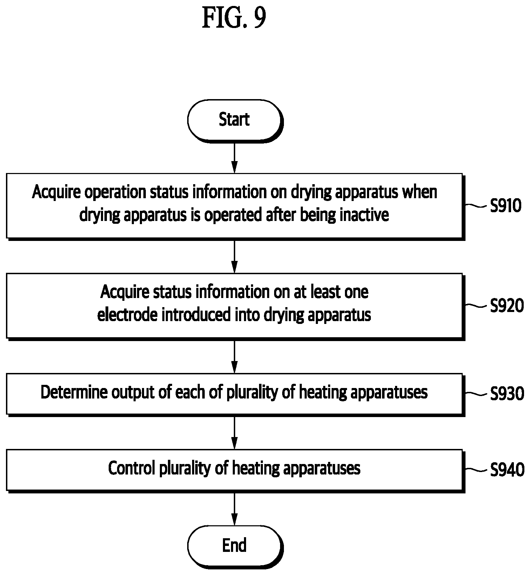

FIG. 9 is a flowchart for describing a control method for an electronic device according to an example embodiment of the present disclosure.

Referring to FIG. 9, in step S910, the processor 130 may acquire operation status information on a drying device when the drying device 200 is operated after being inactive. The operation status information on the drying device 200 may include, for example, an inactivation time and a previous operation time of the drying device and an initial temperature of a heating device corresponding to a drying zone from which an electrode is discharged. For example, the processor 130 may acquire such information from the drying device 200 through the communication circuit 110.

In step S920, the processor 130 may acquire status information on at least one electrode introduced into the drying device 200. Status information on the electrode may include, for example, an initial temperature of a surface of the electrode which is positioned in each of a plurality of drying zones and a targeted temperature of the surface of the electrode at a targeted time point. For example, the processor 130 may acquire such information from the drying device 200 through the communication circuit 110.

In step S930, the processor 130 may determine an output of each of the plurality of heating devices 220. For example, the processor 130 may identify the output of each of the plurality of heating devices 220 by inputting the operation status information on the drying device and the status information on the at least one electrode to a trained deep learning model.

In step S940, the processor 130 may control the plurality of heating devices 220. For example, the processor 130 may control the determined output of each of the plurality of heating devices 220 to be an initial output of each of the plurality of heating devices 220 in a case in which the drying device 200 is operated after being inactive.

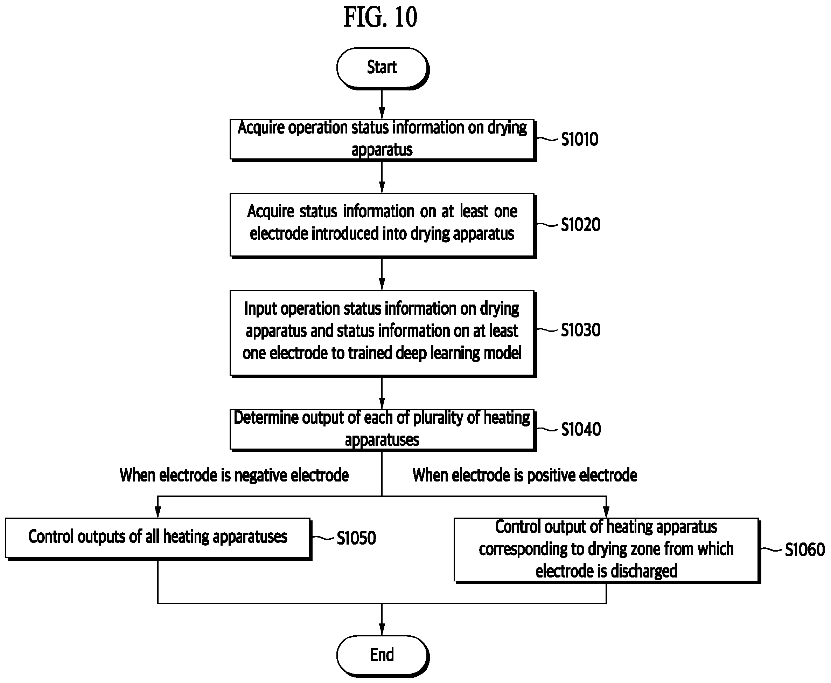

FIG. 10 is a flowchart for describing a detailed control method for an electronic device according to an example embodiment of the present disclosure. Redundant descriptions for FIG. 10, which are similar to those of FIG. 9, will be omitted.

Referring to FIG. 10, in step S1030, the processor 130 may input operation status information on the drying device 200 and status information on at least one electrode to a trained deep learning model. For example, the processor 130 may input data, such as an inactivation time and a previous operation time of the drying device, as the operation status information and data, such as an initial temperature of a surface of an electrode positioned in each of a plurality of drying zones, as status information on the electrode to the trained deep learning model.

In step S1040, the processor 130 may determine an output of each of the plurality of heating devices 220. The processor 130 may identify an output of each of the plurality of heating devices 220, which is output from the deep learning model, and determine the output to be the output of each of the plurality of heating devices 220, which is in a case in which the drying device 220 is operated after being inactive.

The processor 130 may control the plurality of heating devices 220 depending on a type of the electrode. The processor 130 may proceed to step S1050 when the electrode is a negative electrode and proceed to step S1060 when the electrode is a positive electrode.

In step S1050, the processor 130 may control outputs of all heating devices when the electrode is the negative electrode. The processor 130 may control the output identified from the deep learning model to be an initial output of each of all the heating devices.

In step S1060, the processor 130 may control an output of a heating device corresponding to a drying zone from which the electrode is discharged when the electrode is the positive electrode. In other words, the processor 130 may control an output of a heating device in a discharge zone. For example, the processor 130 may set outputs of heating devices positioned in other drying zones, except the heating device in the discharge zone, to 0.

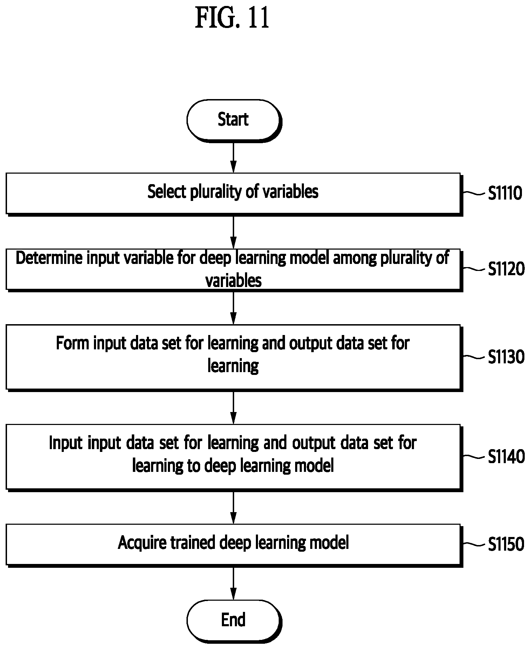

FIG. 11 is a flowchart for describing a method of acquiring a trained deep learning model according to an example embodiment of the present disclosure. FIG. 11 will be described under an assumption that training of the deep learning model is performed in the electronic device 100. However, as described above, generation and the training of the deep learning model may be also performed in a separate apparatus (e.g., an external server), not the electronic device 100.

Referring to FIG. 11, in step S1110, the processor 130 may select a plurality of variables. Specifically, the processor 130 may select a plurality of variables associated with at least one of an operation status of the drying device 200 and a status of an electrode.

In step S1120, the processor 130 may determine an input variable for the deep learning model among the plurality of variables. For example, the processor 130 may analyze a correlation between the plurality of variables and a targeted temperature of a surface of the electrode, based on a traveling speed of the electrode. Also, the processor 130 may determine at least a portion of the plurality of variables to be the input variable for the deep learning model based on an analysis result.

In step S1130, the processor 130 may form an input data set for learning and an output data set for learning, which are for the training of the deep learning model. For example, the processor 130 may form the input data set for learning, which is formed of data on determined input variables.

In step S1140, the processor 130 may input the input data set for learning and the output data set for learning to the deep learning model. In other words, the processor 130 may repeatedly train the deep learning model by inputting the input data set for learning and the output data set for learning to the deep learning model.

In step S1150, the processor 130 may acquire the trained deep learning model. The processor 130 may acquire the trained deep learning model, which is optimized for a targeted characteristic, as a result of repeatedly training the deep learning model. For example, the processor 130 may acquire a deep learning model optimized for drawing an output of each of the plurality of heating devices 220 of the drying device 200.

Meanwhile, the present specification and drawings have been described with respect to the example embodiments of the present disclosure. Although specific terms are used, it is only used in a general sense to easily explain the technical content of the present disclosure and to help the understanding of the invention, and is not intended to limit the scope of the specification. It will be apparent to those skilled in the art that other modifications based on the technical spirit of the present disclosure may be implemented in addition to the embodiments disclosed herein.

An device or terminal according to the above-described example embodiments may include a processor, a memory that stores and executes program data, a permanent storage such as a disk drive, a communication port for communicating with an external device, and a user object device such as a touch panel, a key, and a button. Methods implemented by software modules or algorithms may be stored in a computer-readable recording medium as computer-readable code or program instructions executable in the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, assembler language, and Python, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include the meaning of a series of routines of software in association with a processor.

## Claims

1. An electronic device comprising:
a communication circuit configured to communicate with a drying device comprising a plurality of drying zones for drying an introduced electrode and a plurality of heating devices disposed to individually correspond to the plurality of drying zones and configured to provide heat to the electrode;
a memory configured to store one or more instructions; and
a processor,
wherein when the one or more instructions are executed, the processor is configured to:
acquire operation status information on the drying device when the drying device operates after being inactive;
acquire status information on at least one electrode introduced into the drying device;
determine an output of each of the plurality of heating devices based on the operation status information on the drying device and the status information on the at least one electrode; and
control the plurality of heating devices based on the determined output of each of the plurality of heating devices.

2. The electronic device of claim 1, wherein the operation status information on the drying device comprises an inactivation time and a previous operation time of the drying device and an initial temperature of a heating device corresponding to a drying zone from which the electrode is discharged, and
status information on the electrode comprises an initial temperature of a surface of the electrode which is positioned in each of the plurality of drying zones and a targeted temperature of the surface of the electrode at a targeted time point.

3. The electronic device of claim 2, wherein the targeted time point includes a time point at which a time required for the introduced electrode to reach the drying zone from which the electrode is discharged among the plurality of drying zones elapses from a time point at which the electrode is introduced into the drying device.

4. The electronic device of claim 1, wherein the processor is configured to:
input the operation status information on the drying device and the status information on the at least one electrode to a trained deep learning model; and
identify an output of each of the plurality of heating devices, which is output from the deep learning model.

5. The electronic device of claim 4, wherein the deep learning model is a learning model that:
has, as an input data set for learning, a plurality of pieces of status information on a plurality of electrodes and a plurality of pieces of operation status information on the drying device corresponding to a plurality of operations of the drying device;
has, as an output data set for learning, an output of each of the plurality of heating devices, which corresponds to the plurality of operations of the drying device; and
models a correlation between the input data set for learning and the output data set for learning.

6. The electronic device of claim 4, wherein the trained deep learning model includes a LSTM model.

7. The electronic device of claim 4, wherein the processor is configured to:
select a plurality of variables associated with at least one of an operation status of the drying device and a status of the electrode; and
determine an input variable for the deep learning model by analyzing a correlation between the plurality of variables and a targeted temperature of a surface of the electrode, based on a traveling speed of the electrode.

8. The electronic device of claim 1, wherein the processor is configured to:
control outputs of all heating devices when the electrode is a negative electrode; and
control an output of a heating device corresponding to a drying zone from which the electrode is discharged among the plurality of heating devices when the electrode is a positive electrode.

9. The electronic device of claim 1, wherein the plurality of drying zones
includes a first drying zone, a second drying zone, and a third drying zone disposed along a traveling path of the electrode.

10. A method of controlling an electronic device comprising a plurality of drying zones for drying an introduced electrode and configured to control a plurality of heating devices disposed to individually correspond to the plurality of drying zones and configured to provide heat to the electrode, the method comprising:
acquiring operation status information on the drying device when the drying device operates after being inactive;
acquiring status information on at least one electrode introduced into the drying device;
determining an output of each of the plurality of heating devices based on the operation status information on the drying device and the status information on the at least one electrode; and
controlling the plurality of heating devices based on the determined output of each of the plurality of heating devices.

11. A non-transitory computer-readable recording medium in which a program for executing the method of claim 10 on a computer is recorded.
